# EUROPEAN PATENT SPECIFICATION

(11) **EP 1 714 843 B1**
(45) Date of publication and mention of the grant of the patent: **17.09.2008**
(21) Application number: 06007666.8
(22) Date of filing: 12.04.2006
(51) Int. Cl.: B60R 22/405

(54) **Seat belt retractor with improved web sensor**
Gurtaufroller mit Gurtsensor
Rétracteur de ceinture de sécurité avec capteur de ceinture de sécurité

(30) Priority: 22.04.2005 US 673903 P
(43) Date of publication of application: 25.10.2006
(73) Proprietor: KEY SAFETY SYSTEMS, INC., Sterling Heights, MI 48314 (US)
(72) Inventor: Boelstler, Richard A., Lake Orion Michigan 48359 (US); Negro, Rolando, Macomb MI 48044 (US); Peterson, Carl M. III, Waterford Michigan 48329 (US); Grzic, Rudi, Sterling Heights Michigan 48314 (US)
(74) Representative: Gislon, Gabriele

(56) References cited:
- US-A- 4 422 594
- US-A- 5 507 448
- US-A- 5 687 926

## Description

The present invention relates to a seat belt retractor comprising a web sensor which

activates an inertial wheel and spring to initiate seat belt lockup at different preset levels within a range of desired dynamic performance levels specified by different end users and governmental regulations.
A seat belt retractor of this type is known from US 5 507 448 A1 which is considered to represent the closest prior art.
Figure 1 is an exploded view of a seat belt retractor of the invention.
Figure 2 is a cross-sectional view at section 2 - 2 of Figure 1.
Figure 3 is an end plan view of a spool showing a web sensor pawl and thrust washer installed thereon.
Figure 4 shows an inertia wheel in a rest position upon the spool.
Figure 5 is a cross-sectional view at section 5 - 5 of Figure 4.
Figure 6 is a rear plan view of the inertia wheel.
Figure 7 is a rear plan view of the lock ring.
Figure 8 is a sectional view illustrating the components of the web sensor in a configuration that would initiate seat belt or retractor lockup.
Figures 9a, 9b, 9c and 9d show the front face of the inner disk with web sensor, a spring and various pins.

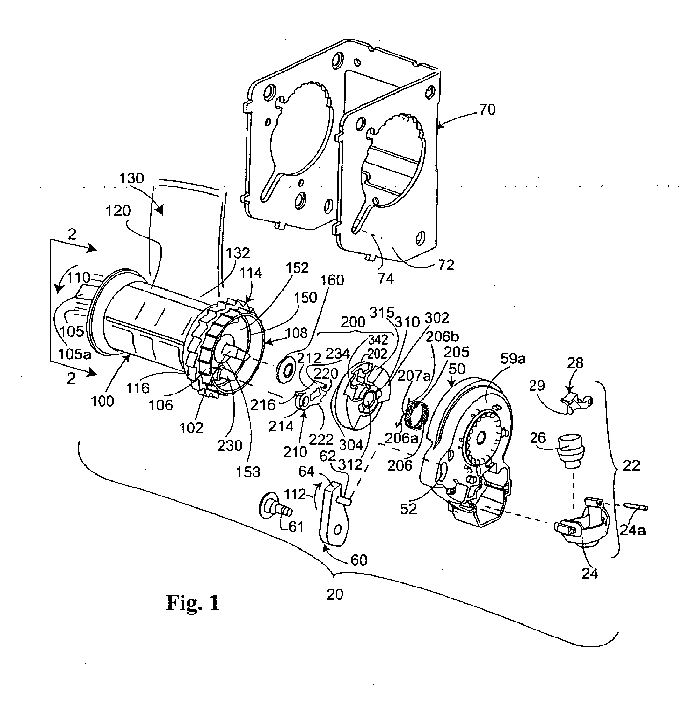

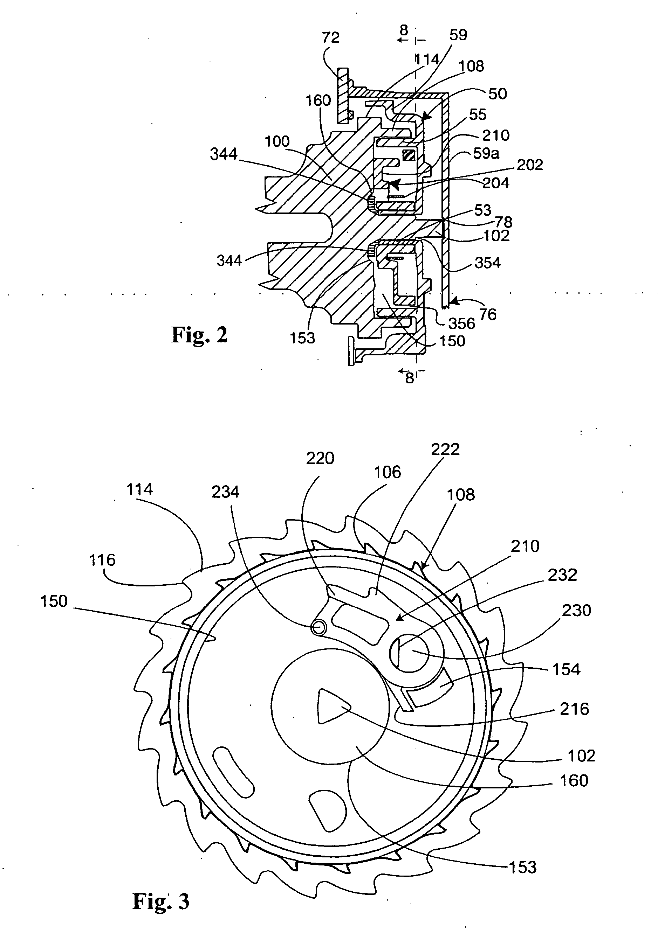

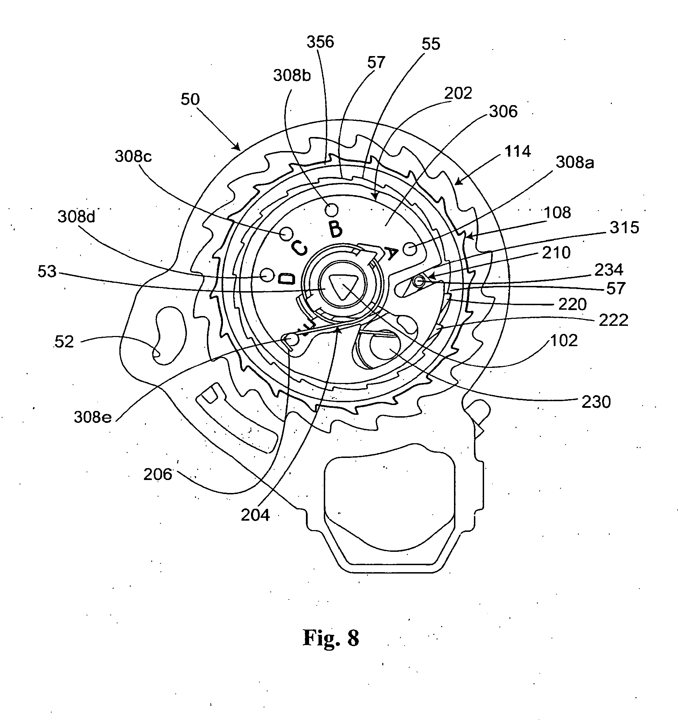

Figure 1 is an exploded view of a seat belt retractor 20 incorporating the present invention and Figure 2 is a cross-sectional view taken at section 2 - 2 of Figure 1. The seat belt retractor 20 includes many features found in known emergency locking retractors (ELRs). The retractor 20 includes a vehicle sensor 22, which comprises a housing 24, a movable mass 26 and a pivoting movable sensor pawl 28 having at least one engagement tooth 29. The sensor pawl 28 is pivoted relative to the housing 24 about a pin 24a. The vehicle sensor 22 is fitted to or made a part of a lock ring 50 of known design. The lock ring 50 is, during non-emergency conditions, rotationally isolated from a shaft 102 that is coaxial with a spool 100. In response to sensing a vehicle deceleration above a set level, the mass 26 of the vehicle sensor 22 moves, causing the sensor pawl 28 to enter into locking engagement with a tooth 106 of the ratchet wheel 108, which is rotatable with the spool 100. In the illustrated embodiment, the ratchet wheel 108 is cast as part of the spool 100. In the illustrated embodiment the spool 100 comprises die cast zinc or aluminum or a non-ferrous material. The lock ring 50 is piloted on the end of the shaft 102 and is rotatable about the shaft. Engagement of the sensor pawl 28 with one of the teeth 106 couples the lock ring 50 to the spool 100. Further rotation of the spool 100 in the direction indicated by arrow 110, a belt unwinding direction, causes a like rotation of the lock ring 50 in a like direction. As described in conjunction with Figure 8, the lock ring 50 includes a stub axle or hollow wall 53, which loosely receives the shaft 102 and serves as a bushing.

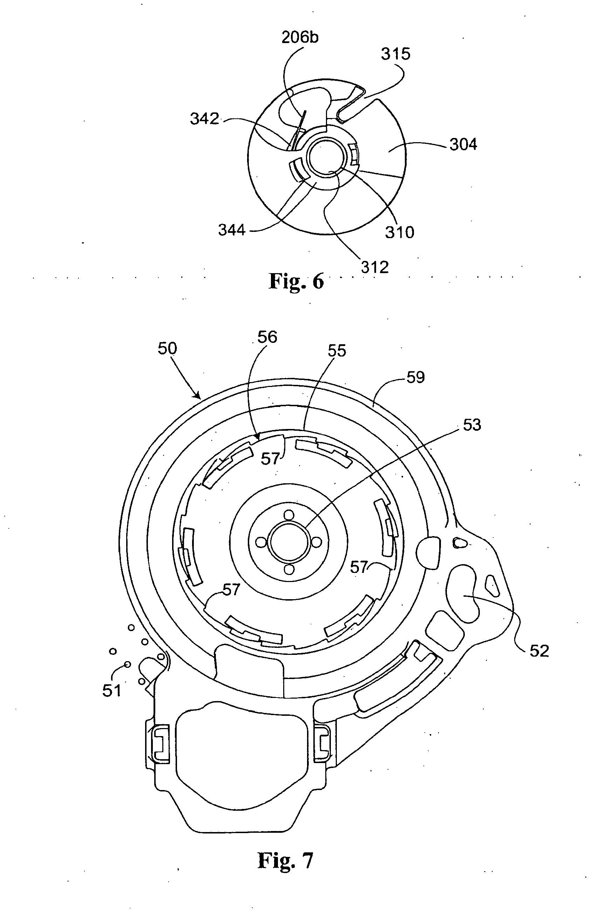

The lock ring 50 has an arcuate cam slot 52 therein and the retractor 20 includes a lock pawl 60, of known design, that is pivoted upon a side 72 of the retractor frame 70 about an axis 74. The lock ring 50 is biased to a rest position relative to the frame side 72 by a bias spring 51, as shown in Figure 7. The lock pawl 60 is pivotally secured to the retractor frame 70 by a pin 61. The lock pawl 60 includes a pin 62 that functions as a cam follower. The pin 62 is slidingly received within the arcuate cam slot 52. Rotation of the lock ring 50 in the direction indicated by arrow 110 causes the arcuate cam slot 52 to move relative to the pin 62. The arcuate cam slot 52 has walls that urge the lock pawl 60, in the direction indicated by arrow 112, into engagement with one or more teeth 116 of another ratchet wheel 114 of the spool 100. Upon engagement of the lock tooth 64 of the lock pawl 60 with a tooth 116 of the ratchet wheel 114, the spool 100 is locked against further rotation in the direction indicated by arrow 110. Either of the ratchet wheels 108, 114 can be an integral part of the spool 100 or added separately to the spool.

As is known in the art, the spool 100 is rotationally supported relative to a U-shaped, typically metal retractor frame 70, in a known manner by bushings in the spool or formed within plastic parts attached to the retractor frame. The spool 100 includes a center portion 120 that secures an end 132 of a length of seat belt webbing 130. The seat belt webbing is wound up about the center portion 120 of the spool 100. The seat belt retractor includes a rewind spring 105 that can engage a spring arbor 105a located at an end of the spool 100 opposite the ratchet wheels 108, 114. The rewind spring 105 under normal non-emergency situations, rotates or rewinds the spool 100 in a direction opposite to the direction indicated by arrow 110 to retract and rewind the seat belt webbing 130 upon the spool.

The shaft 102 shown in Figures 1 and 2 can be made as an integral part of the spool, or alternately can be configured as an extending end of a torsion bar (not shown) or separate axle, which is located within a center bore or passage (not shown) of the spool 100. The shaft 102 is received in a recess 78 (see Figure 2) in a protective plastic cover 76 that is attached to the retractor frame 70 and covers the lock ring 50. The recess 78 acts as a bushing. Other known ways of supporting the shaft are within the scope of the invention. The center of the lock ring 50 can be rotationally supported on the hollow wall 53 of the lock ring 50.

The seat belt retractor 20 includes a web sensor 200. The web sensor 200 comprises an inertia wheel 202; a torsion spring 204 having legs 206a, 208a, each with an end 206, 208; and a web sensor pawl 210 having a body 212 with an opening or bore 214 therein. The web sensor pawl body 212 includes two lock teeth 220, 222. Located near the opening 214 is an extending leg 216 that acts as a mechanical stop to limit the inward rotation of the web sensor pawl 210. The web sensor pawl body 212 includes a pin 234 that acts as a cam follower. The web sensor pawl 210 is rotationally supported on a pin 230. The pin 230 has a flat side 232 and is provided as an integral formation of the spool 100. In Figure 1 the ratchet wheel 108 forms a cup-shaped structure 150 at the end or side of spool 100. The pin 230 extends from a bottom 152 of the cup-shaped structure 150.

The retractor 20 includes a thrust washer 160 that is received about the shaft 102 and fits in a narrow recess 153 in the bottom 152 of the cup-shaped structure 150. The thrust washer 160 reduces sliding friction between the spool 100 and the inertia wheel 202. The placement of the thrust washer 160 and the web sensor pawl 210 is also shown in Figure 3. The bottom 152 of the cup-shaped structure 150 includes another integrally formed projection 154 that cooperates with a leg 216 of the web sensor pawl 210. The counterclockwise rotation, or inward motion, of the web sensor pawl 210, in relation to Figure 3, is stopped upon engagement of the leg 216 with the projection 154.

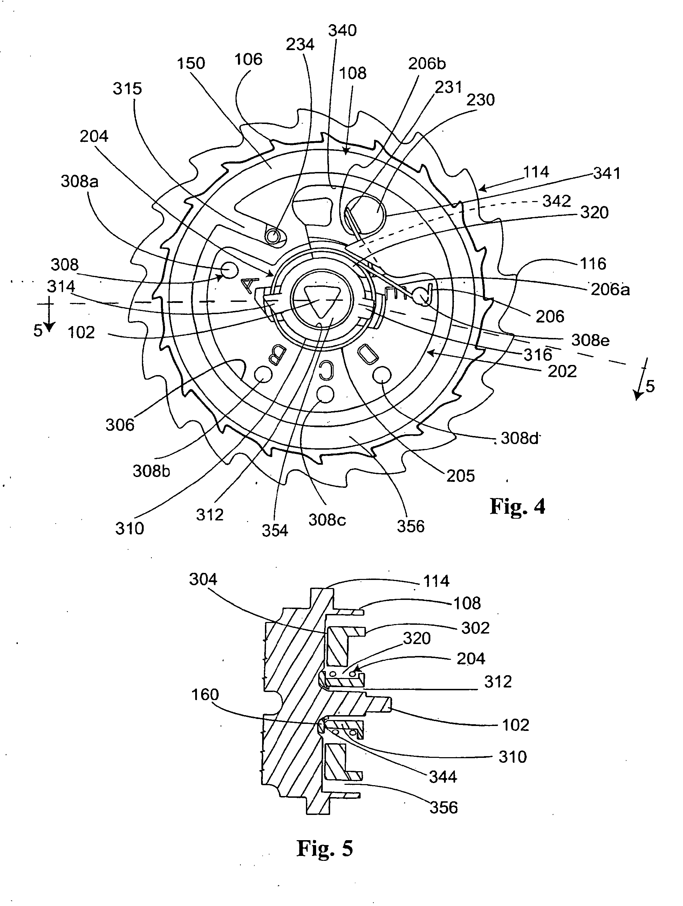

The inertia wheel 202 of the web sensor 200 is shown in Figure 4 assembled upon the spool 100. The web sensor pawl is positioned below the inertia wheel 202 in this figure. Figure 4 shows a partially assembled seat belt retractor. Figure 5 is a cross-sectional view at section 5 - 5 of Figure 4. Figure 6 illustrates the inner or front surface (the opposite side) of the inertia wheel 202.

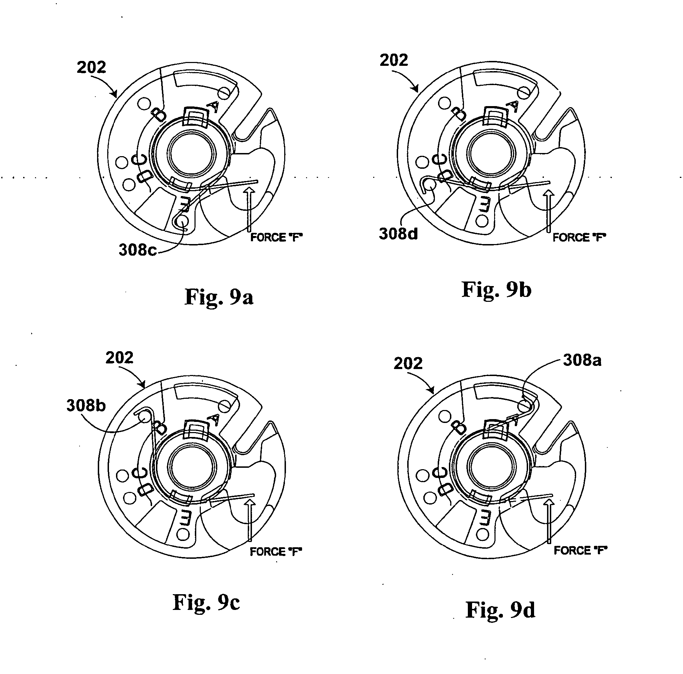

The inertia wheel 202 can be a zinc casting or a formed metal and includes a front or outer surface 302 and a rear or inner surface 304 and a number of intermediate features. Both the front and rear surfaces are stepped by including a variety of different elevations or planes. The front surface 302 is formed with a cavity or depression 306. Within the cavity are a plurality of integrally formed pins 308 (308a - 308e) as shown in Figures 4 and 9a - 9d. The position and purpose of the pins will be discussed below. Each pin 308a - 308e can be inserted in the inertia wheel. The wheel 202 includes an axle 310 having a center bore. In Figure 5 a part of the shaft 102 extends through the bore 312 of the axle 310. The inertia wheel 202, i.e. the axle 310, includes wings 314, 316 that are located proximate the front surface 302 of the inertial wheel 202. The wings 314, 316 prevent the outward creep of the center or spiral-coiled portion 205 of the torsion spring 204 that is installed about the axle 310. An annular groove 320 extends about the axle 310 and the center or spiral-coiled portion 205 of the torsion spring 204 is received therein. A spring leg 206a includes a bent end 206 that envelops a portion of the selected pin as shown in Figure 4.

In Figure 4 the bent end 206 of the spring leg 206a is positioned about a pin 308e. The other leg 206b of the torsion spring 204 extends tangentially outward from the coiled portion 205 into an oblong opening 340 formed in the inertia wheel 202. The spring leg 206b has a bent portion 207a that elevates the end of leg 206b from the corresponding end of the center coiled portion 205, enabling the end of the spring leg 206b to be received within a notch or ledge 342 formed in the inertia wheel. In Figures 5 and 6 a small annular projection or lip 344 is formed at a surface 304 to reduce the area in contact with the thrust washer 160 and reduce the rotational friction acting on the rear surface 304 of the inertia wheel 202.

Reference is again made to Figure 4 and in particular the relationship between the inertia wheel 202 and shaft 102, as well as the inertia wheel 202 and the cup-shaped structure 150 formed by ratchet wheel 108. A first annular space 354 is located between the hollow axle 310 and the shaft 102, and a second annular space 356 is located between the outer circumference of a wheel 202 and the cup-shaped structure 150 that is the inner wall of ratchet wheel 108.

Figure 7 is a plan view of the features formed on the rear face of the lock ring 50. The lock ring 50, at its center, includes a hollow axle 53, also shown in Figure 2, which is received about the end of the axle 102 and functions as a bushing to stabilize the axial position of the axle 102. The hollow axle 53 is positioned within the hollow annular space 354 as shown in Figure 2. The lock ring 50 further includes an extending cylindrical wall 55. The inner surface of the cylindrical wall 55 is formed as a ratchet wheel 56 having a plurality of teeth 57. On assembly, the cylindrical wall 55 is positioned within the space 356, with the ratchet teeth 57 facing the inertia wheel 202. On assembly, the ratchet wheel 108 is positioned about the wall 55 and slightly spaced therefrom. The lock ring 50, at its outer edge, includes another cylindrical wall 59. A ratchet wheel 114 is positioned inside and spaced from the cylindrical wall 59. The lock ring 50 includes an outer wall or outer side face 59a that envelops the web sensor 20 and provides protection for the web sensor as shown in Figure 1.

In Figure 8 the outer wall or face portion 59a of the lock ring 50, that is above section line 9 - 9 of Figure 2, has been removed to more clearly show the inertia wheel and ratchet wheels.

The inertia wheel 202 includes a cam slot 315, which is also shown in Figure 4. With the inertia wheel 202 installed upon the spool 100, the cam follower 234 of the web sensor pawl 210 is received within the cam slot 315. The leg 206b of the torsion spring 204 is positioned on the flat side face 231 of the pin 230 facing the cam slot 315. In this manner the inertial wheel 202 is biased to rotate in a counterclockwise manner as shown in Figure 4. The inertia wheel 202 will achieve a steady state position under the bias of the torsion spring 204 when end 341 of the opening 340 bottoms against a generally opposite side of the pin 230, as shown in Figure 4. In this orientation, the cam follower or pin 234 of the pawl 210 rests near the innermost depth of the cam slot 315. In this orientation, as a consequence of the cam follower 234 being in the above orientation, the web sensor pawl 210 is rotated away from the ratchet teeth 57 of the ratchet wheel 55, so that the web sensor pawl teeth 222 are free from engagement with the teeth 57.

During normal, non-emergency operation of the seat belt retractor, the torsion spring 204 will maintain the inertia wheel 202 in the condition illustrated in Figure 4 wherein the sensor pawl 208 is disengaged from the lock ring 50. During a vehicle crash, as the vehicle rapidly decelerates, a vehicle occupant who is wearing his or her seat belt will tend to move forward and thereby rapidly protract the belt webbing 130 from the spool 100. The protraction of belt webbing causes the spool 100 to rapidly rotate in an unwinding direction as indicated by arrow 110 of Figure 1.

During the initial rapid movement of the spool 100 in response to the rapid withdrawal of the belt webbing 130, the inertia wheel 202 will tend to stay in its pre-crash orientation. Consequently, the rotation of the spool 100 in concert with the tendency of the inertia wheel 202 to stay in place creates a relative displacement rotation between the spool and the inertia wheel. This relative rotation between the spool and the inertia wheel causes the cam follower 234 to move outwardly relative to a cam slot 315 as the inertia wheel rotates. This motion then causes the web sensor pawl 210 to rotate about the pivot pin 230, urging the lock teeth 220, 222 to engage and lock with corresponding teeth or a tooth 57 of the lock ring 50. The above action thereby rotationally couples the lock ring 50 to the spool 100. Further rotation of the lock ring 50 moves a lock pawl 60 into locking engagement with the teeth 116 of the lock wheel or a ratchet 114 formed on and movable with the spool 100. With the lock pawl 60 engaged with the lock teeth 116, the retractor is once again locked from further rotation, preventing further pay-out of the seat belt webbing.

Depending upon governmental or customer supplied specifications, it may be desirable to have the web sensor activate when the web acceleration, as indicated by the rotational acceleration of the spool 100, is between 0.3 - 0.70 g; then the spring leg 206a is positioned on the pin 308e, which positioning changes the bias force produced by the torsion spring 204, which acts upon the inertia wheel 202. The selected bias force keeps the inertial wheel in place at a rest position until the acceleration equals or exceeds the desired level. If the desired lockup acceleration level is between 0.8 and 2.0 g, the spring leg 206a is secured at a pin 308d. If it is desired that the web sensor activate in the vicinity between 1.0 and 3.0 g, the spring is secured at a pin 308c. If it is desired the web sensor activates in the vicinity of 3.0 g, the spring is secured at a pin 308b. If the maximum range is in the vicinity of 4.5 g, the spring leg 206a is secured to a pin 308a. In the various figures, each pin 308a - 308e is located at the radius from the center of inertia wheel 202; the spacing between adjacent pins 308a - 308e varies.

## Claims

1. A seat belt retractor (20) including a spool (100) and a web sensor (200) configured to activate at two or more selected levels of rotational acceleration of the spool (100), the web sensor (200) including a spring loaded inertia wheel (202) rotatable relative to the spool (100), a web sensor pawl (210) having one or more lock teeth (220, 222) thereon, the web sensor pawl (210) being rotationally supported relative to the spool (100), the web sensor (200) further including a torsion spring (204) having a center coiled portion (205) and first and second spring legs (206a, 206b), each spring leg (206a, 206b) having an end (206, 208), the inertia wheel (202) including a plurality of pins (308a - e), the center coiled portion (205) centrally disposed on the inertia wheel (202), the first spring leg (206a) secured to the spool (100) and the second spring leg (206b) secured to one of the pins (308a - e), the torsion spring (204) and pins (308a - e) configured to generate a predetermined bias force corresponding to a selected level of rotational acceleration of the spool (100) below which the inertia wheel (202) remains in a rest position, the inertia wheel (202) configured to rotate relative to the spool (100) as the spool (100) is rapidly moved at a level of rotational acceleration greater than or equal to the selected level of rotational acceleration, such relative rotation causing the movement of the web sensor (200) from a rest position to an activated position.

2. A seat belt retractor according to Claim 1 further including a lock ring (50) rotationally positioned relative to the spool (100) in a belt unwinding direction upon selectively coupling of the lock ring (50) with the spool (100), upon movement of the web sensor pawl (210) to an activated position.

3. A seat belt retractor according to either Claim 1 or 2 wherein at least one of the spring legs (206a, 208a) includes a first section (207a) extending from the center coiled portion (205), such first section offset from an adjacent end of the center coiled portion (205).

4. A seat belt retractor according to Claim 3 wherein the inertia wheel (202) includes a notch (342) under which a first section (207a) of a spring leg (206a, 208a) is received.

5. A seat belt retractor according to any of Claims 1 - 4 wherein the spool (100) includes a cup-like formation (150) into which is received the inertia wheel (202) and wherein the inertia wheel (202) includes a friction reducing formation (344) to reduce friction between the cup-like formation (150) and the inertia wheel (202).

6. A seat belt retractor according to any of Claims 1 - 5 wherein the web sensor pawl (210) includes an extending leg (216) which cooperates with an upraised formation (154) on the a leg 216 of the web sensor pawl 210, the leg (216) configured to contact the upraised formation (154) to limit the rotation of the web sensor pawl (210).

7. A seat belt retractor according to any of Claims 1 - 6 wherein the inertia wheel (202) includes five pins (308a - 308e) with a space between each adjacent pin, wherein the spacing between a third and fourth pins (308c, 308d) is less than the spacing between the third pin (308c) and the second pin (308b), which is less than the spacing between the second pin (308b) and the first pin (308a), which is less than the spacing between the fourth pin (308d) and the fifth pin (308e).

8. A seat belt retractor according to any of Claims 1 - 7 further including a lock ring (50) rotationally positioned relative to the spool (100) and selectively rotationally coupled to rotate with the spool (100) upon movement of the web sensor pawl (210).

## Patentansprüche

1. Sicherheitsgurt-Aufrollvorrichtung (20), die eine Spule (100) und einen Gurtbandsensor (200), der dafür konfiguriert ist, zwei oder mehr ausgewählte Niveaus einer Drehbeschleunigung der Spule (100) zu aktivieren, einschließt, wobei der Gurtbandsensor (200) ein gefedertes Schwungrad (202), das im Verhältnis zu der Spule (100) gedreht werden kann, eine Gurtbandsensor-Sperrklinke (210), die einen oder mehrere Sperrzähne (220, 222) an derselben hat, wobei die Gurtbandsensor-Sperrklinke (210) drehbar im Verhältnis zu der Spule (100) getragen wird, einschließt, wobei der Gurtbandsensor (200) ferner eine Torsionsfeder (204) einschließt, die einen gewendelten Mittelabschnitt (205) und einen ersten und einen zweiten Federschenkel (206a, 206b) hat, wobei jeder Federschenkel (206a, 206b) ein Ende (206, 208) hat, wobei das Schwungrad (202) mehrere Stifte (308a - e) einschließt, wobei der gewendelte Mittelabschnitt (205) mittig an dem Schwungrad (202) angeordnet ist, wobei der erste Federschenkel (206a) an der Spule (100) befestigt ist und der zweite Federschenkel (206b) an einem der Stifte (308a - e) befestigt ist, wobei die Torsionsfeder (204) und die Stifte (308a - e) dafür konfiguriert sind, eine vorbestimmte Vorspannkraft zu erzeugen, die einem ausgewählten Niveau einer Drehbeschleunigung der Spule (100) entspricht, unterhalb dessen das Schwungrad (202) in einer Ruheposition verbleibt, wobei das Schwungrad (202) dafür konfiguriert ist, sich im Verhältnis zu der Spule (100) zu drehen, wenn die Spule (100) schnell auf einem Niveau einer Drehbeschleunigung bewegt wird, das größer als das ausgewählte Niveau einer Drehbeschleunigung oder demselben gleich ist, wobei eine solche relative Drehung die Bewegung des Gurtbandsensors (200) von einer Ruheposition zu einer aktivierten Position bewirkt.

2. Sicherheitsgurt-Aufrollvorrichtung nach Anspruch 1, die ferner einen Sperr-Ring (50) einschließt, der auf ein selektives Koppeln des Sperr-Rings (50) mit der Spule (100) hin auf eine Bewegung der Gurtbandsensor-Sperrklinke (210) zu einer aktivierten Position hin drehend im Verhältnis zu der Spule (100) in einer Gurtband-Abwickelrichtung positioniert wird.

3. Sicherheitsgurt-Aufrollvorrichtung nach Anspruch 1 oder 2, wobei wenigstens einer der Federschenkel (206a, 206b) eine erste Sektion (207a) einschließt, die sich von dem gewendelten Mittelabschnitt (205) aus erstreckt, wobei eine solche erste Sektion von einem benachbarten Ende des gewendelten Mittelabschnitts (205) versetzt ist.

4. Sicherheitsgurt-Aufrollvorrichtung nach Anspruch 3, wobei das Schwungrad (202) eine Kerbe (342) einschließt, unter der eine erste Sektion (207a) eines Federschenkels (206a, 206b) aufgenommen wird.

5. Sicherheitsgurt-Aufrollvorrichtung nach einem der Ansprüche 1 bis 4, wobei die Spule (100) eine napfartige Formation (150) einschließt, in der das Schwungrad (202) aufgenommen wird, und wobei das Schwungrad (202) eine Reibungsminderungsformation (344) einschließt, um die Reibung zwischen der napfartigen Formation (150) und dem Schwungrad (202) zu mindern.

6. Sicherheitsgurt-Aufrollvorrichtung nach einem der Ansprüche 1 bis 5, wobei die Gurtbandsensor-Sperrklinke (210) einen vorstehenden Schenkel (216) einschließt, der mit einer erhöhten Formation (154) an einem Schenkel (216) der Gurtbandsensor-Sperrklinke (210) zusammenwirkt, wobei der Schenkel (216) dafür konfiguriert ist, die erhöhte Formation (154) zu berühren, um die Drehung der Gurtbandsensor-Sperrklinke (210) zu begrenzen.

7. Sicherheitsgurt-Aufrollvorrichtung nach einem der Ansprüche 1 bis 6, wobei das Schwungrad (202) fünf Stifte (308a - 308e) mit einem Abstand zwischen jeweils benachbarten Stiften einschließt, wobei der Abstand zwischen einem dritten und einem vierten Stift (308c, 308d) geringer ist als der Abstand zwischen dem dritten Stift (308c) und dem zweiten Stift (308b), der geringer ist als der Abstand zwischen dem zweiten Stift (308b) und dem ersten Stift (308a), der geringer ist als der Abstand zwischen dem vierten Stift (308d) und dem fünften Stift (308e).

8. Sicherheitsgurt-Aufrollvorrichtung nach einem der Ansprüche 1 bis 7, die ferner einen Sperr-Ring (50) einschließt, der auf eine Bewegung der Gurtbandsensor-Sperrklinke (210) hin drehend im Verhältnis zu der Spule (100) positioniert und selektiv drehend gekoppelt wird, um sich mit der Spule (100) zu drehen.

## Revendications

1. Enrouleur de ceinture de sécurité (20), englobant une bobine (100) et un capteur de la sangle (200), configuré de sorte à être activé au niveau de deux ou de plusieurs niveaux sélectionnés de l'accélération de la rotation de la bobine (100), le capteur de la sangle (200) englobant une roue à inertie chargée par ressort (202) pouvant tourner par rapport à la bobine (100), un cliquet du capteur de la sangle (210) comportant une ou plusieurs dents de verrouillage (220, 222), le cliquet du capteur de la sangle (210) étant supporté de manière rotative par rapport à la bobine (100), le capteur de la sangle (200) englobant en outre un ressort de torsion (204) comportant une partie centrale enroulée (205) et des première et deuxième branches de ressort (206a, 206b), chaque branche de ressort (206a, 206b) comportant une extrémité (206, 208), la roue à inertie (202) englobant plusieurs goupilles (308a-e), la partie centrale enroulée (205) étant agencée de manière centrale sur la roue à inertie (202), la première branche de ressort (206a) étant fixée sur la bobine (100) et la deuxième branche de ressort (206b) étant fixée sur une des goupilles (308a-e), le ressort de torsion (204) et les goupilles (308a-e) étant configurés de sorte à produire une force de poussée prédéterminée correspondant à un niveau sélectionné de l'accélération de la rotation de la bobine (100), au-dessous duquel la roue à inertie (202) reste dans une position de repos, la roue à inertie (202) étant configurée de sorte à tourner par rapport à la bobine (100) lors du déplacement rapide de la bobine (100) à un niveau d'accélération de la rotation supérieur ou égal au niveau sélectionné de l'accélération de la rotation, une telle rotation relative entraînant le déplacement du capteur de la sangle (200) d'une position de repos vers une positon activée.

2. Enrouleur de ceinture de sécurité selon la revendication 1, englobant en outre une bague de verrouillage (50), positionnée de manière rotative par rapport à la bobine (100), dans une direction de déroulement de la ceinture, lors de l'accouplement sélectif de la bague de verrouillage (50) à la bobine (100), pendant le déplacement du cliquet du capteur de la sangle (210) vers une position activée.

3. Enrouleur de ceinture de sécurité selon les revendications 1 ou 2, dans lequel au moins une des branches de ressort (206a, 208a) englobe une première section (207a), s'étendant à partir de la partie centrale enroulée (205), cette première section étant décalée par rapport à une extrémité adjacente de la partie centrale enroulée (205).

4. Enrouleur de ceinture de sécurité selon la revendication 3, dans lequel la roue à inertie (202) englobe une encoche (342) au-dessous de laquelle est reçue une première section (207a) d'une branche de ressort (206a, 208a).

5. Enrouleur de ceinture de sécurité selon l'une quelconque des revendications 1 à 4, dans lequel la bobine (100) englobe une structure en forme de coupe (150) dans laquelle est reçue la roue à inertie (202), la roue à inertie (202) englobant une structure de réduction du frottement (344) pour réduire le frottement entre la structure en forme de coupe (150) et la roue à inertie (202).

6. Enrouleur de ceinture de sécurité selon l'une quelconque des revendications 1 à 5, dans lequel le cliquet du capteur de la sangle (210) englobe une branche à extension (216), coopérant avec une structure surélevée (154) sur la branche (216) du cliquet du capteur de la sangle (210), la branche (216) étant configurée de sorte à contacter la structure surélevée (154) pour limiter la rotation du cliquet du capteur de la sangle (210).

7. Enrouleur de ceinture de sécurité selon l'une quelconque des revendications 1 à 6, dans lequel la roue à inertie (202) englobe cinq goupilles (308a-308e), un espace étant établi entre chaque goupille adjacente, l'espacement entre les troisième et quatrième goupilles (308c, 308d) étant inférieur à l'espacement entre la troisième goupille (308c) et la deuxième goupille (308b), celui-ci étant inférieur à l'espacement entre la deuxième goupille (308b) et la première goupille (308a), celui-ci étant inférieur à l'espacement entre la quatrième goupille (308d) et la cinquième goupille (308e).

8. Enrouleur de ceinture de sécurité selon l'une quelconque des revendications 1 à 7, englobant en outre une bague de verrouillage (50) positionnée de manière rotative par rapport à la goupille (100) et accouplée sélectivement de manière rotative en vue d'une rotation avec la bobine (100) lors du déplacement du cliquet du capteur de la sangle (210).
